# EUROPEAN PATENT SPECIFICATION

(11) **EP 3 957 966 B1**
(45) Date of publication and mention of the grant of the patent: **02.08.2023**
(21) Application number: 21789596.0
(22) Date of filing: 21.06.2021
(51) Int. Cl.: G01K 7/16, H04B 3/54, H04L 12/40, H04Q 9/00, H04L 12/403

(54) **DAISY CHAIN TWO-WIRE SENSOR MEASUREMENT SYSTEM AND METHOD**
DAISY-CHAIN-ZWEIDRAHTSENSORMESSSYSTEM UND VERFAHREN
SYSTÈME ET PROCÉDÉ DE MESURE À CAPTEUR À DEUX FILS EN GUIRLANDE

(30) Priority: 22.06.2020 CN 202010576139
(43) Date of publication of application: 23.02.2022
(73) Proprietor: BAOXING INTELLIGENT TECHNOLOGY (SHANGHAI) CO., LTD., Shanghai 201499 (CN)
(72) Inventor: ZHAO, Chunmeng, Shanghai 201499 (CN); QIU, Quanlong, Shanghai 201499 (CN)
(74) Representative: Petculescu, Ana-Maria
(86) International application number: PCT/CN2021/101173
(87) International publication number: WO 2021/259187

(56) References cited:
- CN-A- 102 087 144
- CN-A- 102 901 576
- CN-A- 103 560 778
- CN-A- 105 004 434
- CN-A- 107 907 157
- CN-A- 111 562 027
- CN-U- 207 765 956
- US-A1- 2017 222 829
- US-B1- 6 563 419
- US-B1- 9 407 145

## Description

### TECHNICAL FIELD

The present invention relates to the field of communication technologies, and more particularly, to a daisy chain two-wire sensor measurement system and method.

### BACKGROUND

Most of prior sensor networks adopt a bus topology, such as the RS485 network technology. Each node has two communication wires, and further has two power wires when being supplied by using a bus, and each node has an independent address. This type of network supports two-way communication, data uploading, and delivery of a control command, and is suitable for a general measurement and control system. However, in this type of network, the bus includes four wires, causing complex cabling and high wire and hardware costs. Each node needs an independent address, so the protocol is complex. Moreover, the system installation and debugging are inconvenient.

Maxim company's temperature measurement chip DS18B20, which is widely used in the market, adopts a one-wire sensor bus. In addition to two power wires, only one communication bus is required. All chips are connected by the three same wires to complete data communication, and each chip has a unique independent identification (ID) number. In this way, the cabling is simplified to a certain extent. However, the three wires are still required, and are distinguished by the ID number, while the ID number needs to be read during installation and deployment, resulting in inconvenient replacement.

As a common communication topology, a daisy chain network can be applied to a sensor network. In the daisy chain network, each node has two pairs of transceivers, and is connected to two communication wires. Each communication wire is connected to two nodes, and the nodes are connected to each other hand in hand. Data of a node is forwarded by an adjacent node. Therefore, the daisy chain network does not need an address. However, the node in the daisy chain network still needs an independent power wire, and thus needs two power wires and two communication interfaces. If one wire is adopted for communication, each node also needs to be connected to four external wires, and data transmission from an end node to a master node requires a lot of forwarding operations. As a result, data may be easily lost, and it is unsuitable to construct a large-scale network.

In some battery management applications, such as a container-specific lithium battery energy storage system, there are often hundreds of packs of batteries connected in series, and each pack of batteries is composed of many lithium batteries connected in parallel. For battery safety, it is necessary to measure temperature of these batteries. In the prior solution, lots of sensors and communication buses are required, resulting in complex connection and making it difficult to perform effective management. In view of this, the present invention provides a daisy chain two-wire sensor measurement system and method. US 2017/222829 A1 discloses systems and techniques for slave-to-slave communication in a multi-node, daisy-chained network. Slave nodes provide or receive upstream or downstream data directly to/from other slave nodes, without the need for data slots first to route through the master node. US 6 563 419 B1 discloses a control and data transmission system which uses simple components to permit current-modulated data transmission via a serial bus. For this purpose, the control and data transmission system has a controllable bus terminating device for impressing a predetermined working current into the bus. Each subscriber has a D.C.-coupled transmitter for generating and emitting control signals and data signals which modulate the working current, and a D.C.-coupled receiver for sensing and evaluating the working current which is modulated by the control signals and data signals. US 9 407 145 B1 discloses a regulated power supply system using multiphase DC-DC converters with dynamic fast-turn on, slow-turnoff phase shedding, early phase turn-on, and both load-voltage and drive-transistor feedback to pulse width modulators to provide fast response to load transients.

### SUMMARY

In order to solve the problems in the prior art, the present invention provides a daisy chain two-wire sensor measurement system according to independent claim 1 and method according to independent claim 6. Favourable embodiments are defined in the dependent claims.

The present invention has the following advantages.

In the present invention, the master module and the plurality of slave sensor detection modules are successively connected in series through the power wire to form the daisy chain sensor monitoring network, thereby realizing easy expansion. A wire is shared for power supply and communication, in other words, only the power wire is employed to supply power for the master module and the plurality of slave sensor detection modules and transmit data, thereby simplifying on-site cabling. The signal is transmitted in a current mode, such that an anti-interference capability is strengthened and no address encoding is required. In addition, the present invention also has advantages of low cost and low power consumption.

In the present invention, a special daisy chain structure is adopted. Data of the lower-stage slave sensor detection module is directly sent to the master module without being forwarded by an upper-stage slave sensor detection module. Each slave sensor detection module is only configured for sampling, data transmission, and controlling the lower bus switch, thereby imposing a low requirement for the slave controller and facilitating implementation at a low cost.

In the present invention, the two-wire bus is adopted, and the cabling is convenient. This technical solution can also be used for other sensor monitoring system. Each slave sensor detection module can also be connected to a plurality of external sensors, and one data transmission channel is shared, thereby further reducing the system cost and simplifying the device installation.

### BRIEF DESCRIPTION OF THE DRAWINGS

To describe the technical solutions in the embodiments of the present invention or in the prior art more clearly, the following briefly describes the drawings required for describing the embodiments or the prior art. Apparently, the drawings in the following description show merely some embodiments of the present invention, and those having ordinary skill in the art may still obtains other drawings from these drawings without creative efforts.
FIG. 1 is a schematic diagram of the structure of a daisy chain two-wire sensor measurement system according to an embodiment of the present invention;
FIG. 2 is a schematic diagram of the structure of a slave module according to an embodiment of the present invention;
FIG. 3 is a circuit diagram of the slave module according to an embodiment of the present invention;
FIG. 4 is a schematic diagram of the structure of a master module according to an embodiment of the present invention;
FIG. 5 is a circuit diagram of the master module according to an embodiment of the present invention;
FIG. 6 is a flow chart of a daisy chain two-wire temperature measurement method according to an embodiment of the present invention;
FIG. 7 is a schematic diagram of a circuit structure used for battery temperature measurement according to an embodiment of the present invention; and
FIG. 8 is a timing diagram of a two-wire daisy chain sensor network system according to an embodiment of the present invention.

### DETAILED DESCRIPTION OF THE EMBODIMENTS

In order to make the objectives, technical solutions, and advantages of the embodiments of the present invention clearer, the technical solutions in the embodiments of the present invention will be clearly and completely described below with reference to the drawings in the embodiments of the present invention. Obviously, the described embodiments are a part, rather than all, of the embodiments of the present invention. All other embodiments obtained by those having ordinary skill in the art based on the embodiments of the present invention without creative efforts shall fall within the scope of protection of the present invention.

### Embodiment 1

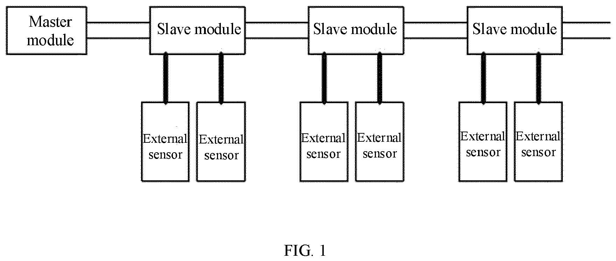

As shown in FIG. 1, this embodiment provides a daisy chain two-wire sensor measurement system, including:
one or more slave modules, connected to one or more sensors, and configured to detect a sensor signal and modulate the detected sensor signal into a corresponding current signal;
a master module, successively cascaded to a first slave module, an upper-stage slave module, and a lower-stage slave module in the one or more slave modules through a daisy chain wire to form a daisy chain sensor network, and interconnected with an upper computer through a communication wire; and
the daisy chain wire, connected between the master module and the first slave module or between the upper-stage slave module and the lower-stage slave module, and configured to supply power and transmit the current signal obtained by the slave modules through modulation, such that the master module obtains and then decodes the current signal on the daisy chain wire to obtain corresponding sensor data.

In this embodiment, the master module includes a power interface, a master lower switch, a master lower interface, a signal demodulation circuit, a master voltage stabilizing circuit, a master controller, and a communication interface.

In this embodiment, the power interface is connected to an external power supply and the master voltage stabilizing circuit. The master voltage stabilizing circuit is connected to the master controller, and configured to stabilize an input supply voltage and output the stabilized supply voltage to the master controller and a peripheral circuit of the master controller.

In this embodiment, the master lower switch is connected to the master controller and connected in series on the daisy chain wire, and controls conduction of a slave upper interface of the first slave module through the master lower interface.

In this embodiment, the signal demodulation module is connected to the master controller, and configured to decode the current signal on the daisy chain wire to obtain the corresponding sensor data.

In this embodiment, the communication interface is connected to the upper computer, and transmits the sensor data to the upper computer.

In this embodiment, the slave module includes a slave upper interface, a slave lower interface, an anti-reverse connection circuit, a slave voltage stabilizing circuit, a signal modulation circuit, a slave controller, and a slave lower switch.

The slave upper interface of the lower-stage slave module is connected to the slave lower interface of the upper-stage slave module, or the slave upper interface of the first slave module is connected to the master lower interface of the master module.

A slave lower bus switch is connected between the slave upper interface and the slave lower interface to control conduction of the lower-stage slave module.

The slave voltage stabilizing circuit is connected between the slave upper interface and the slave controller, configured to stabilize a voltage input by a daisy chain bus and output the stabilized voltage to the slave controller and a peripheral circuit of the slave controller for power supply, and further configured to shield interference to the slave controller caused by signal transmission when the slave module transmits data.

The signal modulation circuit is connected between the slave upper interface and the slave controller, and configured to modulate the sensor signal into the corresponding current signal and transmit the current signal to the master module through the daisy chain wire.

In this embodiment, the signal modulation circuit uses a light-emitting diode to perform signal modulation, and displays a working status of the slave module during data transmission. During data transmission, the light-emitting diode blinks.

In this embodiment, the slave module includes an internal sensor and an external sensor, a slave controller is connected to the internal sensor and the external sensor to detect the internal sensor and the external sensor, and the internal sensor is configured to obtain an internal parameter of the slave module.

In this embodiment, the external sensor includes one or more of a temperature sensor, an ultrasonic sensor, an acceleration sensor, a gas smoke sensor, a humidity sensor, a vibration sensor, a photosensitive sensor, or a Hall switch sensor.

In this embodiment, the connection is simple. Only two wires are used to connect the master module and the first slave module, and connect the upper-stage slave module and the lower-stage slave module.

In this embodiment, data of any slave module is directly sent to the master module without being forwarded by an intermediate node, and the data transmission adopts the current signal, which is suitable for a long-distance and multi-node network system.

In this embodiment, the slave module does not need address encoding. No address field is needed in a protocol. It is convenient for installation, deployment, debugging, maintenance, and replacement.

In this embodiment, only a voltage stabilizing circuit, an analog-digital (AD) sampling circuit, a metal-oxide-semiconductor (MOS) switch, and a plurality of resistors are required in the circuit of the slave module, and there is no large capacitor and inducer. This makes it easy to realize an integrated circuit and further reduce a marginal cost.

In this embodiment, each node only works when it needs to transmit data, and is in a power down or sleep mode at other time. Power consumption of the module in the sleep mode is about 10 uA. Even for a network including 100 nodes, the average power consumption of the network is only 1 mA.

### Embodiment 2

This embodiment provides a daisy chain topology. One-way communication in which a slave temperature detection module sends data to a master module is performed, and the slave temperature detection module is connected to a plurality of temperature sensors, which are usually distributed in an environment in which the temperature sensors are adjacent to each other.

For example, the temperature sensors are attached to different parts of an identical battery pack, so the temperature difference is small. Considering that the master module spends a lot of time in receiving a large amount of temperature sensor data, which affects the average data refreshing speed, this embodiment proposes a data compression algorithm.

In this embodiment, in order to further reduce the cost, volume and fault rate of the system, a slave controller of the slave temperature detection module may employ a low-precision oscillator as a clock source.

For example, anRC oscillator inside a chip is employed. For this purpose, this embodiment proposes a data transmission protocol that can tolerate a large clock error.

First, abnormality of the temperature sensor is screened out. If the temperature sensor is open-circuited, Tn=Tmax; if the temperature sensor is short-circuited, Tn=0. A value in the range (0, Tmax) is a measured value of the temperature sensor. For example, if Tn=1, corresponding temperature is -40 °C; if Tn=160, corresponding temperature is 120 °C.

The minimum value Tmin of normal N temperature values of the sensors that are collected by the slave controller is calculated as a reference value, and Tn'=Tn-Tmin is used as a temperature difference. Taking four temperature sensors as an example, a corresponding transmission protocol consists of the following fields:
1. Measurement interval field. The measurement interval field specifies time for measuring a measured value of each temperature sensor after the slave temperature detection module is powered on, and a certain time interval maintained to divide a data waveform of data transmission of an upper-stage slave temperature detection module 12.
2. Clock synchronization field. The slave temperature detection module uses its own clock as a reference to send 1010 in sequence to inform the master module of a clock frequency used by the slave temperature detection module. Based on the interval time of receiving the two numbers "1", the master module determines the clock reference used by the slave temperature detection module. The width of a clock bit in this field is set as W.
3. Temperature reference value field. A binary code of Tmin is sent bit by bit at the interval of W. If all the temperature sensors are short-circuited, then Tmin=00000000b, and a temperature difference field is empty. If all the temperature sensors are open-circuited, then Tmin=11111111b, and the temperature difference field is empty. If some temperature sensors are open-circuited, and the other temperature sensors are short-circuited, in other words, there is no normal temperature sensor, then Tmin=00000000b, and the temperature difference field is not empty.
4. Temperature difference field. N temperature differences Tn' are sent in sequence according to the following encoding rule: if the temperature difference is less than 8, then 10b+TN'3 is sent (TN'3 indicates a 3-bit binary number); if the temperature difference is equal to 0, then 1100b is sent; if the temperature sensor is open-circuited, then 1110b is sent; if the temperature sensor is short-circuited, then 1101b is sent; if the temperature difference is greater than or equal to 8, then 01b+Tn'8 is sent.
5. Check field. A check result is calculated through parity check or in other check manner and sent.

In this embodiment, the clock synchronization field, the temperature reference value field, the temperature difference field, and the check field are collectively referred to as a data transmission field.

The protocol and the encoding rule in this embodiment define the fault types and codes of the temperature sensors, thereby facilitating debugging. There will not be 0000000000b in a code stream, so loss of synchronization will not occur easily. There will not be 1111111111b in the code stream, so loss of synchronization will not occur easily. It takes short time to transmit a fault code, such that a sensor fault has little impact on overall communication. The protocol implicitly specifies the clock used by the slave module, and thus can be used for low-precision clock system. Taking four temperature sensors as an example, in most cases, the protocol can save transmission time of data of 8-12 bits. Even if there is a large temperature difference, accurate transmission can still be realized.

### Embodiment 3

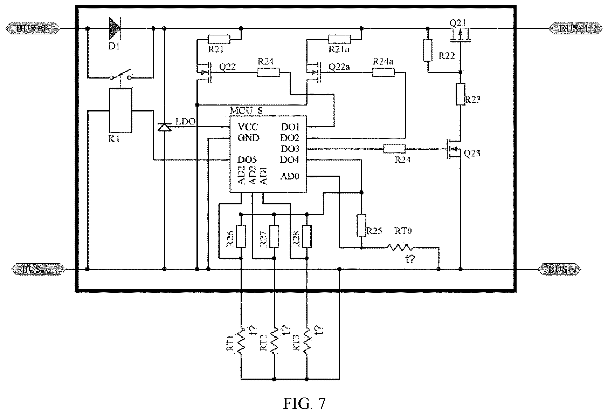

In order to further reduce data transmission time, improve a data refreshing rate (for example, in a large energy storage system in which there are two hundred battery packs and each battery pack has ten single batteries connected in parallel, it takes a lot of time to transmit thousands of temperature values), discover an abnormal battery temperature as soon as possible, and improve safety, this embodiment employs a circuit structure shown in FIG. 7.

In FIG. 7, R21, R24 and Q22 constitute one signal modulation module 28, and R21a, R24a and Q22a constitute another signal modulation module 28. The two signal modulation modules 28 are connected in parallel and controlled by slave controllers 21 respectively. When on-resistances of Q22 and Q22a are ignored, assuming that R21>R21a, the following four cases are available:
1. Q22 and Q22a are turned off, the total output current of the signal modulation modules 28 is 0 and denoted as I0, and the voltage of R11 is 0.
2. Q22a is turned off, Q22 is turned on, and the total output current of the signal modulation modules 28 is equal to the current on R21 and denoted as I1.
3. Q22a is turned on, Q22 is turned off, and the total output current of the signal modulation modules 28 is equal to the current on R21a and denoted as I2.
4. Q22a is turned on, Q22 is turned on, and the total output current of the signal modulation modules 28 is equal to the sum of the current on R21a and the current on R21 and denoted as I3.

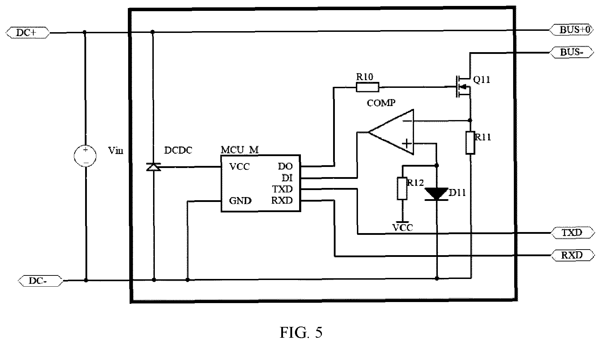

In this embodiment, since R21>R21a, I0<I1<I2<I3. By selecting appropriate resistance values of R21 and R21a, four distinct voltages can be obtained on R11 of a master module (as shown in FIG. 5). By means of this modulation circuit, four-symbol encoding can be realized, for example, I0 corresponds to 00b, I1 corresponds to 01b, I2 corresponds to 10b, and I3 corresponds to 11b. This type of symbol encoding can greatly improve the speed of data transmission.

The modulation circuit in this embodiment is simple, can be easily realized, and has low cost. The symbol encoding greatly saves the transmission time. In addition, symbols differ from each other greatly, so it is not easy to cause a bit error.

This embodiment employs a four-symbol transmission protocol and an encoding rule as follows.
1. Measurement interval field.
2. Clock synchronization field. The slave temperature detection module 12 uses its own bit clock W as a reference to send I3, I2, I1 and I0 in sequence to inform the master module 11 of a clock frequency and a symbol level that are used by the slave temperature detection module 12.
3. Temperature reference value field. A quaternary code of Tmin is sent bit by bit at the interval of W. If all the temperature sensors are short-circuited, then Tmin=0000q (quaternary system), and a temperature difference field is empty. If all the temperature sensors are open-circuited, then Tmin=3333q (quaternary system), and the temperature difference field is empty. If some temperature sensors are open-circuited, and the other temperature sensors are short-circuited, in other words, there is no normal temperature sensor, then Tmin=0000q, and the temperature difference field is not empty.
4. Temperature difference field. N temperature differences Tn' are sent in sequence according to the following encoding rule: if the temperature difference is less than 16, then 2q+Tn'2q is sent (Tn'2q indicates a 2-bit quaternary number); if the temperature difference is equal to 0, then 30q is sent; if the temperature sensor is open-circuited, then 32q is sent; if the temperature sensor is short-circuited, then 31q is sent; if the temperature difference is greater than or equal to 16, then 1q+Tn'4q is sent.
5. Check field. A check result is calculated through parity check or in other check manner and sent.

The protocol in this embodiment adopts symbol encoding, thereby achieving high transmission efficiency. There will be neither 00000q nor 33333q in a code stream, so loss of synchronization will not occur easily, which has a lower requirement for clock precision. The synchronization field completes transmission of bit timing and bit encoding synchronously.

### Embodiment 4

Taking temperature measurement as an example, this embodiment provides a daisy chain two-wire temperature measurement system, including: a master module configured to obtain a temperature signal, and a plurality of slave temperature detection modules configured to detect the temperature signal. The master module and the plurality of slave temperature detection modules are successively connected in series through a power wire to form a daisy chain temperature monitoring network. The slave temperature detection module modulates the detected temperature signal into a corresponding current signal and transmits the current signal through the power wire. The master module decodes the current signal on the power wire to obtain corresponding temperature data.

In this embodiment, each of the plurality of slave temperature detection modules includes an upper temperature transmission interface and a lower temperature transmission interface that are connected to each other. The upper temperature transmission interface of a lower-stage slave temperature detection module is connected to the lower temperature transmission interface of an upper-stage slave temperature detection module through the power wire to directly transmit the temperature signal to the master module, without requiring the upper-stage slave temperature detection module to process the temperature signal.

The concept of a daisy chain in this embodiment refers to a wreath formed by connecting many daisies in series. In this embodiment, the daisy chain means that the plurality of slave temperature detection modules are successively connected in series, including a first-stage slave temperature detection module, a second-stage slave temperature detection module, ...., and so on, and transmit the detected temperature signals to the master module.

The greatest advantage of the daisy chain structure in this embodiment is that a plurality of devices can be connected by using the limited signal transmission wire to share an identical service, which do not have bus competition, blocking or other problems. When a new slave temperature detection module needs to be added, it only needs to be connected to the tail of the daisy chain structure. Therefore, the daisy chain structure can be easily expanded.

In the prior art, a power wire is employed for power supply and a communication wire is employed for communication. When there are many slave temperature detection modules, wire complexity is increased and it is prone to occur a wire fault.

In this embodiment, the slave temperature detection module encodes the temperature signal to change a wire current, such that the master module decodes the current signal on the power wire to obtain the corresponding temperature data, thereby realizing temperature signal transmission. Two power wires are used to supply power and transmit the temperature signal at the same time, such that no communication wire for separate communication is needed, and no address encoding is needed. The signal is transmitted in the current mode, which strengthen the anti-interference capability.

When the slave temperature detection module encodes the temperature signal, a unique corresponding number is added. When decoding the current signal, the master module can determine a source of the temperature signal based on the number. When the temperature signal is abnormal, the faulty slave temperature detection module can be determined.

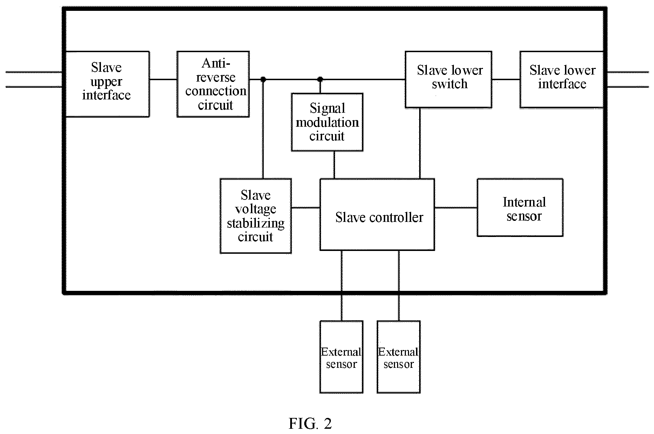

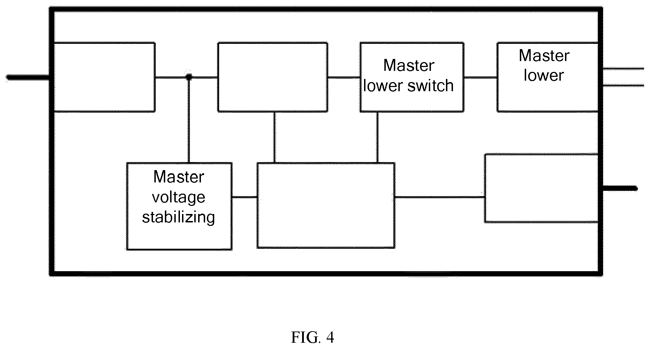

In this embodiment, as shown in FIGS. 2 and 4, the master module includes a power interface and a lower temperature transmission interface, and each of the plurality of slave temperature detection modules includes the upper temperature transmission interface and the lower temperature transmission interface.

The power interface is connected to a power supply, the lower temperature transmission interface is connected to the upper temperature transmission interface of the first-stage slave temperature detection module through the power wire, and the upper temperature transmission interface of the lower-stage slave temperature detection module is connected to the lower temperature transmission interface of the upper-stage slave temperature detection module through the power wire. A connection mode based on the daisy chain facilitates expansion and requires no communication interface of the master module.

A direct current (DC) voltage is input to the power interface. A recommended voltage of an input power supply is 12 V. In some embodiments, an anti-reverse connection diode may be designed to prevent the input power supply from being connected reversely, or a full-bridge rectifier circuit may be designed to ignore the polarity of the power supply, such that the power supply can work no matter whether it is connected forwardly or reversely.

In this embodiment, each of the plurality of slave temperature detection modules includes: a temperature sensor, configured to obtain the temperature signal; and a slave lower bus switch, connected between the upper temperature transmission interface and the lower temperature transmission interface to control conduction of the lower-stage slave temperature detection module.

A slave controller connected to the temperature sensor, the slave lower bus switch and the lower temperature transmission interface is configured to control the temperature sensor, the slave lower bus switch and the lower temperature transmission interface.

A signal modulation module connected between the upper temperature transmission interface and the slave controller is configured to modulate the temperature signal into the corresponding current signal.

In this embodiment, each of the plurality of slave temperature detection modules further includes: a slave voltage stabilizing circuit, connected between the upper temperature transmission interface and the lower temperature transmission interface to stabilize an input supply voltage and output the stabilized supply voltage. When the voltage changes greatly, the output voltage is stabilized to provide a stable DC power supply for the slave controller.

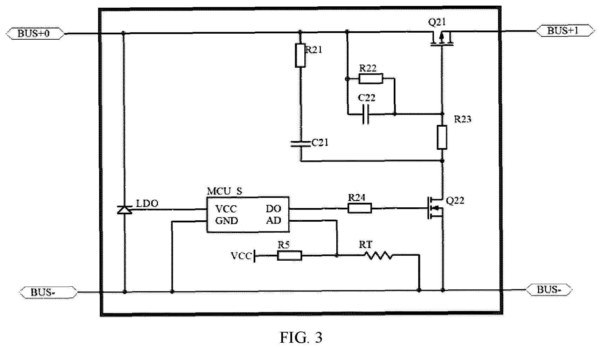

FIG. 3 is a circuit diagram of the slave temperature detection module. In FIG. 3, MCU_ S represents the slave controller, and LDO represents the slave voltage stabilizing circuit. The resistor R24, the switch transistor Q22, the capacitor C21, and the resistor R21 constitute the signal modulation module. R5 and RT constitute a temperature sensor circuit. The resistor R22, the capacitor C22, the switch transistor Q21, the resistor R23, and the switch transistor Q22 constitute the slave lower bus switch. BUS+0 and BUS-constitute the upper temperature transmission interface, and BUS+1 and BUS- constitute the lower temperature transmission interface.

After there is a voltage on an upper temperature transmission bus, the slave controller is powered on to be started. After the slave controller is stable for a period of time, temperature sampling is activated. After the slave temperature detection module is powered on, voltages of the capacitor C22 and the capacitor C21 remain 0 V. The pin DO of the slave controller outputs a high level to turn on the switch transistor Q22. The voltage of the capacitor C22 cannot change suddenly, so the switch transistor Q21 remains off. The voltage of the capacitor C21 cannot change suddenly, and the resistor R21 instantaneously bears a voltage of the upper temperature transmission interface, resulting in a large modulated current.

Then, the pin DO of the slave controller outputs a low level, and the switch transistor Q22 is turned off, or at least the turn-on time of the switch transistor Q22 is not long. The switch transistor Q21 remains off. During turn-on and turn-off of the switch transistor Q22, a pulse current is generated on the upper bus. Since lower bus switches of all upper-stage slave temperature detection modules are turned on, temperature information can be transmitted to the upper temperature transmission bus by using the pulse current, and a demodulation circuit of the master controller can directly restore the modulated temperature data.

After the temperature data is completely transmitted, the pin DO of the slave controller remains in an output state of the high level, the current of the resistor R21 is gradually reduced to zero, the voltage of the capacitor C22 is gradually increased, so that the switch transistor Q21 is turned on, and the lower-stage slave temperature detection module is started. Meanwhile, the current-stage slave temperature detection module can enter a low-power sleep state.

In this embodiment, the master module includes: a signal demodulation module, configured to decode the current signal on the power wire to obtain the corresponding temperature data; and a master controller, connected to the signal demodulation module and the lower temperature transmission interface to control conduction of the lower temperature transmission interface.

In this embodiment, a master lower bus switch is connected between the lower temperature transmission interface and the master controller. In addition, the sampling resistor R is connected in series between the lower temperature transmission interface and the master lower bus switch, and the signal demodulation module is connected in parallel to the sampling resistor R and connected to the master controller.

In this embodiment, the signal demodulation module includes the sampling resistor R that is connected in series on the power wire and connected in parallel to the signal demodulation module, and the signal demodulation module samples and demodulates the voltage on the sampling resistor.

When the current on the power wire changes, the voltage on the sampling resistor R also changes, and the signal demodulation module performs decoding based on the voltage change to obtain the corresponding temperature data.

In this embodiment, the master module further includes a master lower bus switch connected to the power interface and the lower temperature transmission interface to control conduction of the slave temperature detection module.

In this embodiment, the master module further includes a master voltage stabilizing circuit connected to the power interface and the master controller and configured to stabilize an input supply voltage and output the stabilized supply voltage.

When the supply voltage changes greatly, an output voltage is stabilized to provide a stable DC power supply for the master controller.

In this embodiment, to facilitate storage and analysis of the temperature data, the master module further includes a communication interface connected to the master controller and an upper computer to transmit the temperature data to the upper computer.

In this embodiment, FIG. 5 is a circuit diagram of the master module. In FIG. 5, MCU_ M represents the master controller. The comparator COMP, the resistor R11, the resistor R12, and the diode D11 constitute a simple demodulation circuit. The resistor R10 and the switch transistor Q11 constitute a lower bus switch. After the switch transistor Q11 is is controlled by the master controller to be turned on, a voltage is generated on the sampling resistor R11. After a current is generated on a modulation circuit of the slave module, the current also flows through the resistor R11 to generate a voltage. The demodulation circuit can compare values of the voltages to restore the temperature data signal.

### Embodiment 5

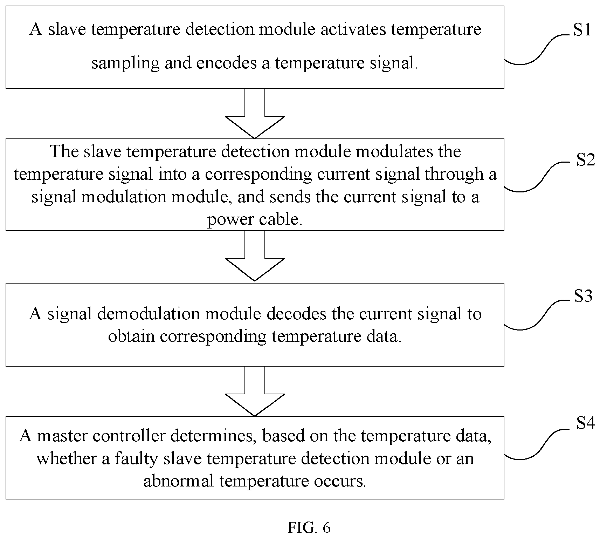

As shown in FIG. 6, this embodiment provides a daisy chain two-wire temperature measurement method, including the following steps:
S1: A slave temperature detection module activates temperature sampling and encodes a temperature signal.
S2: The slave temperature detection module modulates the temperature signal into a corresponding current signal through a signal modulation module, and sends the current signal to a power wire.
S3: A signal demodulation module decodes the current signal to obtain corresponding temperature data.
S4: A master controller determines, based on the temperature data, whether a faulty slave temperature detection module or an abnormal temperature occurs.

In this embodiment, a master module receives an instruction from a communication interface of an upper computer, and starts a temperature measurement process. The master controller turns on a lower bus switch and prepares for receiving data.

In this embodiment, after being powered on, the slave temperature detection module starts to work, activates temperature sampling, and encodes the temperature signal. The slave temperature detection module sends the temperature signal to the power wire through the signal modulation module. The temperature signal passing through the power wire is converted into a change of a resistance voltage by a signal demodulation unit of the master module, and then is converted into a serial signal by a demodulation circuit to be received by the master controller of the master module.

In this embodiment, the slave temperature detection module turns on a lower bus switch, and activates a sleep mode after the bus is connected to a lower-stage slave temperature detection module, such that the current-stage slave temperature detection module is in a low-power sleep state.

The above steps are repeated until data transmission of all slave temperature detection modules is completed. The master controller turns off the lower bus switch, analyzes and processes all temperature data, and determines whether a faulty slave temperature detection module or an abnormal temperature occurs.

In this embodiment, the master module transmits the collected temperature data and fault information to the upper computer through the communication interface of the upper computer. So far, one temperature data collection process is completed. In the whole measurement process, the slave modules are powered on successively, and enter the sleep mode after transmitting data to be in a low-power state. After the measurement is completed, the master controller turns off the lower bus switch, and all the slave temperature detection modules are powered off to reduce power consumption. Therefore, the system has low power consumption in the whole measurement process.

### Embodiment 6

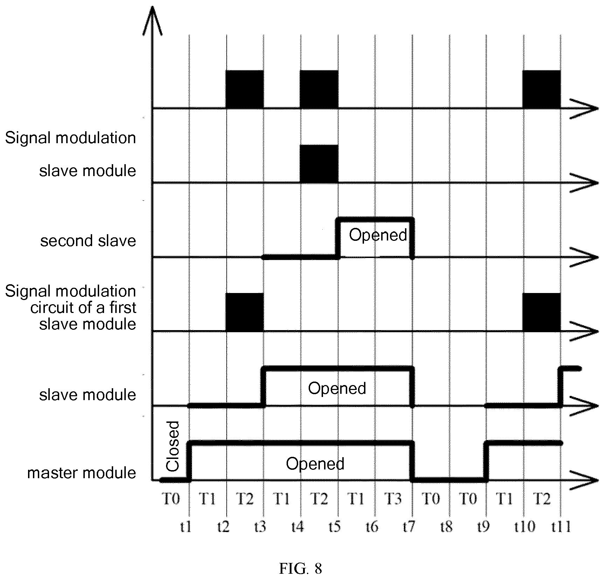

This embodiment provides a fault location method. FIG. 8 is a timing diagram of a two-wire daisy chain sensor system.

T0 represents a time period in which a bus is turned off, and is controlled by a master module. In this time period, the master module turns off a master lower switch, and all slave modules are in a power-off state.

T1 represents a time period for synchronization. In this time period, the master module already turns on the master lower switch, and the slave modules are powered on successively. Duration of T1 is determined by the slave modules. The slave modules prepare for data transmission after being powered on and completing sensor sampling within T1. The upper limit of the duration of T1 is T1max.

T2 represents a time period for data transmission. In this time period, the slave modules complete collection of the sensor data, process and transmit the data. The upper limit of the duration of T2 is T2max.

This embodiment provides a data transmission and fault location method of the two-wire daisy chain sensor system with N slave modules, including the following steps:
S1: turning on the master lower switch by the master module, terminating T0, and activating timing for T1, where n is set to 1.
S2: if the master module does not receive any data within T1max, determining that n slave modules fail to perform reading, and jumping to SE.
S3: activating timing for T2 after the master module receives data, terminating all data, and waiting for completion of data transmission.
S4: if T2>T2max, determining that a data error occurs on an N^{th} slave module, and jumping to SE.
S5: if a check error exists in the data, jumping to SE; if a fault indicating that a sensor is open-circuited or short-circuited exists in the data, jumping to S6.
S6: setting n to n+1, and activating timing for T1.
S7: jumping to S2.
SE: if n=N+1, indicating that data of all the slave modules is received and data transmission is completed, turning off the master lower switch by the master module; if n<N+1, determining that a communication fault occurs on an n^{th} slave module.

In conclusion, according to the present invention, the master module and the plurality of slave sensor detection modules are successively connected in series through the power wire to form the daisy chain sensor monitoring network, thereby realizing easy expansion. A wire is shared for power supply and communication, in other words, only the power wire is employed to supply power for the master module and the plurality of slave sensor detection modules and transmit data, thereby simplifying on-site cabling. The signal is transmitted in a current mode, such that an anti-interference capability is strengthened and no address encoding is required. In addition, the present invention also has advantages of low cost and low power consumption.

In the present invention, a special daisy chain structure is adopted. Data of the lower-stage slave sensor detection module is directly sent to the master module without being forwarded by an upper-stage slave sensor detection module. Each slave sensor detection module is only configured for sampling, data transmission, and controlling the lower bus switch, thereby imposing a low requirement for the slave controller and facilitating implementation at a low cost.

In the present invention, the two-wire bus is adopted, and the cabling is convenient. This technical solution can also be used for other sensor monitoring system. Each slave sensor detection module can also be connected to a plurality of external sensors, and one data transmission channel is shared, thereby further reducing the system cost and simplifying the device installation.

## Claims

1. A daisy chain two-wire sensor measurement system, comprising:
slave modules, wherein the slave modules are connectable to one or more sensors, and the slave modules are configured to detect a sensor signal and modulate the sensor signal into a current signal corresponding to the sensor signal;
a master module, wherein the master module is successively cascaded to a first slave module, an upper-stage slave module, and a lower-stage slave module in the slave modules through a daisy chain wire to form a daisy chain sensor network, and the master module is interconnected with an upper computer through a communication wire; and
the daisy chain wire, wherein the daisy chain wire is configured to supply power and transmit the current signal obtained by the slave modules through modulation, and the master module is configured to obtain and then decode the current signal on the daisy chain wire to obtain sensor data corresponding to the current signal; and **characterized in that** the system is configured to execute the following steps:
the master module receives an instruction from a communication interface of the upper computer, and starts a measurement process; a master controller of the master module turns on a master lower switch of the master controller and prepares for receiving data, wherein the master lower switch is connected to the master controller and connected in series on the daisy chain wire, and controls conduction of a slave upper interface of the first slave module through a master lower interface; after being powered on, the first slave module starts to work;
activates sampling, and encodes a corresponding signal; the first slave module sends the corresponding signal to the daisy chain wire through a signal modulation module of the first slave module; the signal passing through the daisy chain wire is converted into a change of a resistance voltage by a signal demodulation module of the master module, and then is converted into a serial signal by a demodulation circuit to be received by the master controller of the master module; then the first slave module turns on a slave lower switch, wherein the slave lower switch is connected between the slave upper interface and a slave lower interface of the first slave module to control conduction of the lower-stage slave module and the first slave module, activates a sleep mode after the bus is connected to the lower-stage slave module,
such that the first slave module is in a low-power sleep state; then these steps are repeated until data transmission of all of the slave modules is completed, then the master controller turns off the master lower switch, analyses and processes all data, and determines whether a faulty slave module or abnormal sensor data occurs.

2. The daisy chain two-wire sensor measurement system of claim 1, wherein
the master module comprises a power interface, the master lower switch, the master lower interface,
the signal demodulation module, a master voltage stabilizing circuit, the master controller, and the communication interface, wherein
the power interface is connected to an external power supply and the master voltage stabilizing circuit; and
the master voltage stabilizing circuit is connected to the master controller, and the master voltage stabilizing circuit is configured to stabilize an input supply voltage to obtain a stabilized supply voltage and then output the stabilized supply voltage to the master controller and a peripheral circuit of the master controller;
the signal demodulation module is connected to the master controller, and the signal demodulation module is configured to decode the current signal on the daisy chain wire to obtain the sensor data corresponding to the current signal;
the communication interface is connected to the upper computer, and transmits the sensor data to the upper computer.

3. The daisy chain two-wire sensor measurement system of claim 1, wherein
each slave module comprises the slave upper interface the slave lower interface, an anti-reverse connection circuit, a slave voltage stabilizing circuit, the signal modulation circuit, a slave controller, and the slave lower switch, wherein
the slave upper interface of the lower-stage slave module is connected to the slave lower interface of the upper-stage slave module, or the slave upper interface of the first slave module is connected to a master lower interface of the master module;
the slave voltage stabilizing circuit is connected between the slave upper interface and the slave controller, the slave voltage stabilizing circuit is configured to stabilize a voltage input by a daisy chain bus to obtain a stabilized voltage and then output the stabilized voltage to the slave controller and a peripheral circuit of the slave controller for power supply, and the slave voltage stabilizing circuit is further configured to shield interference to the slave controller caused by signal transmission when each slave module transmits data; and
the signal modulation circuit is connected between the slave upper interface and the slave controller, and the signal modulation circuit is configured to modulate the sensor signal into the current signal corresponding to the sensor signal and transmit the current signal to the master module through the daisy chain wire.

4. The daisy chain two-wire sensor measurement system of claim 3, wherein
the signal modulation circuit uses a light-emitting diode to perform signal modulation, and displays a working status of each slave module during data transmission.

5. The daisy chain two-wire sensor measurement system of claim 1, wherein
each slave module comprises an internal sensor and an external sensor;
a slave controller is connected to the internal sensor and the external sensor to detect the internal sensor and the external sensor;
the internal sensor is configured to obtain an internal parameter of each slave module; and
the external sensor comprises a temperature sensor, an ultrasonic sensor, an acceleration sensor, a gas smoke sensor, a humidity sensor, a vibration sensor, a photosensitive sensor, or a Hall switch sensor.

6. A daisy chain two-wire sensor measurement method, using the daisy chain two-wire sensor measurement system of any one of claims 1-5, and comprising the following steps:
S1: initializing the daisy chain two-wire sensor measurement system, activating sampling the sensor signal, and encoding the sensor signal;
S2: modulating the sensor signal into the current signal corresponding to the sensor signal, and sending the current signal to the daisy chain wire;
S3: decoding the current signal in S2 to obtain the sensor data corresponding to the current signal; and
S4: determining, based on the sensor data, whether a faulty slave module or abnormal sensor data occurs.

7. The daisy chain two-wire sensor measurement method of claim 6, wherein
data transmission and fault location of a single slave module comprise the following time periods:
T0, wherein T0 represents a time period in which a bus is turned off, and T0 is controlled by a master module; in T0, the master module turns off a master lower switch, and all the one or more slave modules are in a power-off state;
T1, wherein T1 represents a time period for synchronization; in T1, the master module already turns on the master lower switch, and the one or more slave modules are powered on successively; a duration of T1 is determined by the one or more slave modules; the one or more slave modules prepare for data transmission after being powered on and completing sensor sampling within T1, wherein an upper limit of the duration of T1 is T1max; and
T2, wherein T2 represents a time period for data transmission; in T2, the one or more slave modules complete collection of the sensor data, process and transmit the sensor data, wherein an upper limit of a duration of T2 is T2max.

8. The daisy chain two-wire sensor measurement method of claim 7, wherein data transmission and fault location of N slave modules comprise the following steps:
S1: turning on the master lower switch by the master module, terminating T0, and activating timing for T1, wherein n is set to 1;
S2: when the master module does not receive any data within T1max, determining that n slave modules fail to perform reading, and jumping to SE;
S3: activating timing for T2 after the master module receives data, terminating all data, and waiting for completion of data transmission;
S4: when T2>T2max, determining that a data error occurs on an N^{th} slave module, and jumping to SE;
S5: when a check error exists in the data, jumping to SE; when a fault indicating that a sensor is open-circuited or short-circuited exists in the data, jumping to S6;
S6: setting n to n+1, and activating timing for T1;
S7: jumping to S2; and
SE: when n=N+1, indicating that data of all the N slave modules is received and data transmission is completed, turning off the master lower switch by the master module; when n<N+1, determining that a communication fault occurs on an n^{th} slave module.

## Patentansprüche

1. Messsystem eines Daisy-Chain-Zweidrahtsensors, umfassend:
Slave-Module, wobei die Slave-Module mit einem oder mehreren Sensoren verbindbar sind, und die Slave-Module dazu konfiguriert sind, ein Sensorsignal zu erkennen und das Sensorsignal in ein Stromsignal zu modulieren, das dem Sensorsignal entspricht;
ein Master-Modul, wobei das Master-Modul nacheinander über einen Daisy-Chain-Draht mit einem ersten Slave-Modul, einem übergeordneten Slave-Modul und einem untergeordneten Slave-Modul in den Slave-Modulen kaskadiert wird, um ein Daisy-Chain-Sensornetzwerk zu bilden, und wobei das Master-Modul über einen Kommunikationsdraht mit einem oberen Computer verbunden ist, und
einen Daisy-Chain-Draht, wobei der Daisy-Chain-Draht dazu konfiguriert ist, eine Stromversorgung zu ermöglichen und das durch Modulation durch die Slave-Module erhaltene Stromsignal zu übertragen, und wobei der Daisy-Chain-Draht dazu konfiguriert ist, das Stromsignal auf dem Daisy-Chain-Draht zu erhalten und dann zu dekodieren, um Sensordaten zu erhalten, die dem Stromsignal entsprechen; **dadurch gekennzeichnet, dass** das System dazu konfiguriert ist, folgende Schritte durchzuführen:
das Master-Modul empfängt eine Anweisung von einer Kommunikationsschnittstelle des oberen Computers und startet einen Messprozess; ein Master-Controller des Master-Moduls schaltet einen unteren Master-Schalter des Master-Controllers ein und bereitet sich auf den Empfang von Daten vor, wobei der untere Master-Schalter mit dem Master-Controller verbunden ist und an den Daisy-Chain-Draht in Reihe geschaltet ist, und die Leitung einer oberen Slave-Schnittstelle des ersten Slave-Moduls über eine untere Master-Schnittstelle steuert;
nach dem Einschalten beginnt das erste Slave-Modul zu arbeiten; eine Abtastung wird aktiviert, und ein entsprechendes Signal wird kodiert; das erste Slave-Modul sendet das entsprechende Signal über ein Signalmodulationsmodul des ersten Slave-Moduls an den Daisy-Chain-Draht; das durch den Daisy-Chain-Draht geleitete Signal wird von einem Signaldemodulationsmodul des Master-Moduls in eine Änderung einer Widerstandsspannung umgewandelt und dann von einer Demodulationsschaltung in ein serielles Signal umgewandelt, das vom Master-Controller des Master-Moduls empfangen wird; dann schaltet das erste Slave-Modul einen unteren Slave-Schalter ein, wobei der untere Slave-Schalter zwischen der oberen Slave-Schnittstelle und einer unteren Slave-Schnittstelle des ersten Slave-Moduls geschaltet ist, um die Leitung des untergeordneten Slave-Moduls und des ersten Slave-Moduls zu steuern, wobei der untere Slave-Schalter einen Schlafmodus aktiviert, nachdem der Bus mit dem untergeordneten Slave-Modul verbunden wurde, so dass sich das erste Slave-Modul in einem Schlafzustand mit geringem Stromverbrauch befindet; anschließend werden diese Schritte wiederholt, bis die Datenübertragung aller Slave-Module abgeschlossen ist; dann schaltet der Master-Controller den unteren Master-Schalter aus, analysiert und verarbeitet alle Daten und bestimmt, ob ein fehlerhaftes Slave-Modul vorliegt oder abnormale Sensordaten vorliegen.

2. Messsystem eines Daisy-Chain-Zweidrahtsensors nach Anspruch 1,
wobei das Master-Modul eine Stromschnittstelle, den unteren Master-Schalter, die untere Master-Schnittstelle, das Signaldemodulationsmodul, eine Master-Spannungsstabilisierungsschaltung, den Master-Controller und die Kommunikationsschnittstelle umfasst,
wobei die Stromschnittstelle mit einer externen Stromversorgung und der Master-Spannungsstabilisierungsschaltung verbunden ist; und
wobei die Master-Spannungsstabilisierungsschaltung mit dem Master-Controller verbunden ist, wobei die Master-Spannungsstabilisierungsschaltung dazu konfiguriert ist, eine Eingangsversorgungsspannung zum Erhalten einer stabilisierten Versorgungsspannung zu stabilisieren und dann die stabilisierte Versorgungsspannung an den Master-Controller sowie eine Peripherieschaltung des Master-Controllers auszugeben;
wobei das Signaldemodulationsmodul mit dem Master-Controller verbunden ist, und das Signaldemodulationsmodul dazu konfiguriert ist, den Stromsignal auf dem Daisy-Chain-Draht zu dekodieren, um die Sensordaten zu erhalten, die dem Stromsignal entsprechen;
wobei die Kommunikationsschnittstelle mit dem oberen Computer verbunden ist und die Sensordaten an den oberen Computer überträgt.

3. Messsystem eines Daisy-Chain-Zweidrahtsensors nach Anspruch 1,
wobei jedes Slave-Modul die obere Slave-Schnittstelle, die untere Slave-Schnittstelle, eine Verpolungsschutzschaltung, eine Slave-Spannungsstabilisierungsschaltung, die Signalmodulationsschaltung, einen Slave-Controller und den unteren Slave-Schalter umfasst,
wobei die obere Slave-Schnittstelle des untergeordneten Slave-Moduls mit der unteren Slave-Schnittstelle des übergeordneten Slave-Moduls verbunden ist, oder die obere Slave-Schnittstelle des ersten Slave-Moduls mit einer unteren Master-Schnittstelle des Master-Moduls verbunden ist;
wobei die Slave-Spannungsstabilisierungsschaltung zwischen der oberen Slave-Schnittstelle und dem Slave-Controller geschaltet ist, wobei die Slave-Spannungsstabilisierungsschaltung dazu konfiguriert ist, eine von einem Daisy-Chain-Bus eingegebene Spannung zum Erhalten einer stabilisierten Spannung zu stabilisieren und dann die stabilisierte Spannung an den Slave-Controller und eine Peripherieschaltung des Slave-Controllers zur Stromversorgung auszugeben, und wobei die Slave-Spannungsstabilisierungsschaltung ferner dazu konfiguriert ist, bei der Datenübertragung durch jedes Slave-Modul Störungen des Slave-Controllers, die durch die Signalübertragung verursacht werden, abzuschirmen; und
wobei die Signalmodulationsschaltung zwischen der oberen Slave-Schnittstelle und dem Slave-Controller geschaltet ist, und die Signalmodulationsschaltung dazu konfiguriert ist, das Sensorsignal in das dem Sensorsignal entsprechende Stromsignal zu modulieren und das Stromsignal über den Daisy-Chain-Draht an das Master-Modul zu übertragen.

4. Messsystem eines Daisy-Chain-Zweidrahtsensors nach Anspruch 3,
wobei die Signalmodulationsschaltung eine Leuchtdiode zur Durchführung einer Signalmodulation verwendet und während der Datenübertragung einen Arbeitsstatus jedes Slave-Moduls anzeigt.

5. Messsystem eines Daisy-Chain-Zweidrahtsensors nach Anspruch 1,
wobei jedes Slave-Modul einen internen Sensor und einen externen Sensor umfasst;
wobei ein Slave-Controller mit dem internen Sensor und dem externen Sensor verbunden ist, um den internen Sensor und den externen Sensor zu erkennen;
wobei der interne Sensor dazu konfiguriert ist, einen internen Parameter jedes Slave-Moduls zu erhalten; und
wobei der externe Sensor einen Temperatursensor, einen Ultraschallsensor, einen Beschleunigungssensor, einen Gasrauchsensor, einen Feuchtigkeitssensor, einen Vibrationssensor, einen lichtempfindlichen Sensor oder einen Hall-Schalter-Sensor umfasst.

6. Messverfahren eines Daisy-Chain-Zweidrahtsensors, das das Messsystem eines Daisy-Chain-Zweidrahtsensors nach einem der Ansprüche 1 bis 5 verwendet und folgende Schritte umfasst:
S1: Initialisieren des Messsystems eines Daisy-Chain-Zweidrahtsensors, Aktivieren der Abtastung des Sensorsignals und Kodieren des Sensorsignals;
S2: Modulieren des Sensorsignals in das dem Sensorsignal entsprechende Stromsignal, und
Senden des Stromsignals an den Daisy-Chain-Draht;
S3: Dekodieren des Stromsignals in S2, um die dem Stromsignal entsprechenden Sensordaten zu erhalten; und
S4: Bestimmen basierend auf den Sensordaten, ob ein fehlerhaftes Slave-Modul vorliegt oder abnormale Sensordaten vorliegen.

7. Messverfahren eines Daisy-Chain-Zweidrahtsensors nach Anspruch 6,
wobei eine Datenübertragung und eine Fehlerortung eines einzelnen Slave-Moduls folgende Zeiträume umfassen:
T0, wobei T0 einen Zeitraum darstellt, in dem ein Bus ausgeschaltet ist, und wobei T0 von einem Master-Modul gesteuert wird; wobei in T0 das Master-Modul einen unteren Master-Schalter ausschaltet und sich das eine oder die mehreren Slave-Module alle in einem ausgeschalteten Zustand befinden;
T1, wobei T1 einen Zeitraum zur Synchronisation darstellt; wobei in T1 das Master-Modul bereits den unteren Master-Schalter einschaltet und das eine oder die mehreren Slave-Module nacheinander eingeschaltet werden; wobei eine Dauer von T1 durch das eine oder
die mehreren Slave-Module bestimmt wird; wobei sich das eine oder die mehreren Slave-Module nach seinem/ihrem Einschalten und dem Abschluss der Sensorabtastung innerhalb von T1 auf die Datenübertragung vorbereiten, wobei eine Obergrenze der Dauer von T1 T1max ist; und
T2, wobei T2 einen Zeitraum zur Datenübertragung darstellt; wobei in T2 das eine oder die mehreren Slave-Module die Erfassung der Sensordaten abschließen, und die Sensordaten verarbeiten und übertragen, wobei eine Obergrenze einer Dauer von T2 T2max ist.

8. Messverfahren eines Daisy-Chain-Zweidrahtsensors nach Anspruch 7, wobei eine Datenübertragung und eine Fehlerortung von N Slave-Modulen folgende Schritte umfassen:
S1: Einschalten des unteren Master-Schalters durch das Master-Modul, Beenden von T0 und Aktivieren des Timens für T1, wobei n auf 1 gesetzt ist;
S2: Bestimmen, dass n Slave-Module keinen Lesevorgang durchführen können, und Springen zu SE, wenn das Master-Modul innerhalb von T1max keine Daten empfängt;
S3: Aktivieren des Timens für T2, nachdem das Master-Modul Daten empfangen hat, Beenden aller Daten und Warten auf den Abschluss der Datenübertragung;
S4: Bestimmen, dass ein Datenfehler auf einem N-ten Slave-Modul auftritt, und Springen zu SE, wenn T2 > T2max gilt;
S5: Springen zu SE, wenn ein Prüffehler in den Daten vorliegt; Springen zu S6, wenn in den Daten ein Fehler vorliegt, der angibt, dass ein Sensor unterbrochen oder kurzgeschlossen ist;
S6: Setzen von n auf n+1 und Aktivieren des Timens für T1;
S7: Springen zu S2; und
SE: Angeben, dass die Daten aller N Slave-Module empfangen sind und die Datenübertragung abgeschlossen ist, und Ausschalten des unteren Master-Schalters durch das Master-Modul, wenn n = N + 1 gilt; Bestimmen, dass ein Kommunikationsfehler auf einem n-ten Slave-Modul auftritt, wenn n<N+1 gilt.

## Revendications

1. Système de mesure de capteur bifilaire en guirlande, **caractérisé en ce qu'**il comporte :
des modules subordonnés, dans lesquels ils sont reliés à un ou plusieurs capteurs, et les modules subordonnés sont configurés pour détecter le signal de capteur et le moduler en un signal de courant correspondant au signal de capteur ;
un module principal, dans lequel il est connecté successivement en cascade au premier module subordonné, à un module subordonné de niveau supérieur, et à un module subordonné de niveau inférieur dans les modules subordonnés par l'intermédiaire d'un fils en guirlande pour former un réseau de capteur en guirlande, et le module principal est relié à un ordinateur supérieur par un fils de communication ; et
le fils en guirlande, dans lequel il est configuré pour fournir de l'électricité et transmettre le signal de courant obtenu par les modules subordonnés par l'intermédiaire de la modulation, et le module principal est configuré pour obtenir et décoder le signal de courant sur le fils en guirlande afin d'obtenir les données du capteur correspondant au signal de courant ; et **caractérisé en ce que** ce système est configuré pour exécuter les étapes suivantes :
le module principal reçoit une instruction d'une interface de communication de l'ordinateur supérieur et commence un processus de mesure ; un contrôleur principal du module principal met en marche son interrupteur principal inférieur et se prépare à recevoir des données, dans lequel l'interrupteur principal inférieur est connecté au contrôleur principal et sur le fils en guirlande en série, et contrôle la conduction d'une interface subordonnée supérieure du premier module subordonné par une interface principale inférieure ;
après la mise sous tension, le premier module subordonné commence à fonctionner ;
activer l'échantillonnage et encoder un signal correspondant ; le premier module subordonné transmet le signal correspondant au fils en guirlande par un module de modulation de signal du premier module subordonné ; le signal passant par le fils en guirlande est converti en un changement de résistance et tension par un module de démodulation de signal du module principal, puis il est converti en un signal continu par un circuit de démodulation afin d'être reçu par le contrôleur principal du module principal ; puis le premier module subordonné met en marche un interrupteur subordonné inférieur, dans lequel cet interrupteur est monté entre l'interface subordonnée supérieure et l'interface subordonnée inférieure afin de contrôler la conduction du module subordonné de niveau inférieur et du premier module subordonné, et active un mode veille après que le bus est connecté au module subordonné de niveau inférieur, de sorte que le premier module subordonné est dans un état veille à faible consommation ; puis les étapes sont réitérées jusqu'à ce que la transmission des données de tous les modules subordonnés est accomplie, puis le contrôleur principal éteint l'interrupteur principal inférieur, analyse et traite toutes les données, et détermine s'il y a des données d'un module subordonné détraque ou d'un capteur anormal.

2. Système de mesure de capteur bifilaire en guirlande selon la revendication 1, dans lequel
le module principal comporte une interface d'alimentation, l'interrupteur principal inférieur, l'interface principal inférieur, le module de démodulation de signal, le circuit avec tension principale stable, le contrôleur principal et l'interface de communication, dans lesquels
l'interface d'alimentation est connectée à une alimentation externe et au circuit avec tension principale stable ; et
le circuit avec tension principale stable est connecté au contrôleur principal, et il est configuré pour stabiliser une entrée de la tension d'alimentation afin d'obtenir une tension d'alimentation stable et la transporter au contrôleur principal et à un circuit périphérique du contrôleur principal ;
le module de démodulation de signal est connecté au contrôleur principal, et il est configuré pour décoder le signal de courant sur le fils en guirlande afin d'obtenir les données du capteur correspondant au signal de courant ;
l'interface de communication est connectée à l'ordinateur supérieur et transmet les données du capteur à l'ordinateur supérieur.

3. Système de mesure de capteur bifilaire en guirlande selon la revendication 1, dans lequel
chaque module subordonné comporte l'interface subordonnée supérieure, l'interface subordonnée inférieure, un circuit de connexion anti-inversion, le circuit avec tension subordonnée stable, le circuit de modulation de signal, un contrôleur subordonné et l'interrupteur subordonné inférieur, dans lesquels
l'interface subordonnée supérieure du module subordonné de niveau inférieur est connectée à l'interface subordonnée inférieure du module subordonné de niveau supérieur, ou l'interface subordonnée supérieure du premier module subordonné est connectée à l'interface principale inférieure du module principal ;
le circuit avec tension subordonnée stable est monté entre l'interface subordonnée supérieure et le contrôleur subordonné, et il est configuré pour stabiliser une entrée de la tension d'alimentation par un bus en guirlande afin d'obtenir une tension stable et la transporter au contrôleur subordonné et à un circuit périphérique du contrôleur subordonné pour l'alimentation ; en outre, il est configuré pour protéger le contrôleur subordonné contre les interférences à cause de la transmission de signal lorsque chaque module subordonné transmet les données ; et
le circuit de modulation de signal est monté entre l'interface subordonnée supérieure et le contrôleur subordonné, et il est configuré pour moduler le signal de capteur en le signal de courant correspondant au signal de capteur et transmettre le signal de courant au module principal par le fils en guirlande.

4. Système de mesure de capteur bifilaire en guirlande selon la revendication 3, dans lequel
le circuit de modulation de signal utilise une diode électroluminescente pour faire la modulation de signal et présente un état de marche de chaque module subordonné pendant la transmission des données.

5. Système de mesure de capteur bifilaire en guirlande selon la revendication 1, dans lequel
chaque module subordonné comporte un capteur intérieur et un capteur extérieur ;
un contrôleur subordonné est connecté au capteur intérieur et au capteur extérieur pour les détecter ;
le capteur intérieur est configuré pour obtenir un paramètre intérieur de chaque module subordonné ; et
le capteur extérieur comporte un capteur de température, un capteur ultrasonique, un capteur d'accélération, un capteur de fumée, un capteur de humidité, un capteur de vibration, un capteur photosensible ou un capteur de Hall interrupteur.

6. Méthode de mesure de capteur bifilaire en guirlande, utilisant le système de mesure de capteur bifilaire en guirlande selon l'une des revendications 1 à 5, et comportant les étapes suivantes :
E1 : initialiser le système de mesure de capteur bifilaire en guirlande, activer l'échantillonnage du signal de capteur et encorder le signal de capteur ;
E2 : moduler le signal de capteur en le signal de courant correspondant au signal de capteur, et le transmettre au fils en guirlande ;
E3 : décoder le signal de courant à E2 pour obtenir les données du capteur correspondant au signal de courant ; et
E4 : sur la base des données du capteur, déterminer s'il y a des données d'un module subordonné détraque ou d'un capteur anormal.

7. Méthode de mesure de capteur bifilaire en guirlande selon la revendication 6, dans lequel
la transmission des données et la localisation pour les fautes d'un seul module subordonné comportent les périodes suivantes :
P0, dans lesquelles P0 représente une période dans laquelle le bus est éteint, et la période P0 est contrôlée par un module principal ; dans la période P0, le module principal éteint un interrupteur principal inférieur, et un ou plusieurs modules subordonnés sont en état d'arrêt ;
P1, dans lesquelles P1 représente une période pour la synchronisation ; dans la période P1, le module principal a déjà mis en marche l'interrupteur principal inférieur, et un ou plusieurs modules subordonnés sont mis sous tension successivement ; la durée de la période P1 est déterminée par un ou plusieurs modules subordonnés ; dans la période P1, après la mise sous tension et le accomplissement de l'échantillonnage du capteur, un ou plusieurs modules subordonnés se préparent pour la transmission des données, dans laquelle une limite supérieure de la durée de la période P1 est P1 max ; et
P2, dans lesquelles P2 représente une période pour la transmission des données ; dans la période P2, un ou plusieurs modules subordonnés accomplissent la collecte des données du capteur, les traitent et les transmettent, dans laquelle une limite supérieure de la durée de la période P2 est P2 max.

8. Méthode de mesure de capteur bifilaire en guirlande selon la revendication 7, dans lequel la transmission des données et la localisation pour les fautes de N modules subordonnés comportent les étapes suivantes :
E1 : mettre en marche l'interrupteur principal inférieur par le module principal, terminer la période P0, et activer le chronométrage de la période P1, dans laquelle n est fixé à 1 ;
E2 : quand le module principal ne reçoit aucune donnée dans la période P1 max, déterminer que n modules subordonnés ne faites pas la lecture et passer à EE ;
E3 : activer le chronométrage de la période P2 après que le module principal a reçu les données, terminer toutes les données, et attendre l'achèvement de la transmission des données ;
E4 : quand P2>P2 max, déterminer qu'il y une erreur des données sur un Nième module subordonné et passer à EE ;
E5 : quand il y a une erreur de vérification dans les données, passer à EE ; quand une faute indiquant que le capteur est en circuit ouvert ou en court-circuit existe dans les données, passer à E6 ;
E6 : être fixé à n+1, et activer le chronométrage de la période P1 ;
E7 : passer à E2 ; et
EE : quand n=N+1, indiquer que les données de tous les N modules subordonnés sont reçues et la transmission des données est accomplie, éteindre l'interrupteur principal inférieur par le module principal ; quand n<N+1, déterminer qu'il y a une faute de communication sur un n* module subordonné.
